# EUROPEAN PATENT APPLICATION

(11) **EP 3 298 897 A1**
(43) Date of publication of application: **28.03.2018**
(21) Application number: 16189840.8
(22) Date of filing: 21.09.2016
(51) Int. Cl.: A01N 65/08, A01N 65/22, A01N 65/28, A01N 65/38, A01N 65/40, A01P 3/00, A01P 5/00, A01P 7/00, A01P 9/00, A01P 13/00, A01P 17/00, A01P 21/00

(54) **PLANT-BASED PLANT CONDITIONER AND PROTECTION PRODUCT, METHOD OF PRODUCING SUCH PRODUCT, AND USE OF SUCH PRODUCT**

(71) Applicant: Gyogynövenykutato Kft, 2011 Budakalasz (HU)
(72) Inventor: DULOVICS, Edit Éva, 1093 Budapest (HU); PALLOS, József Péter, 1221 Budapest (HU)
(74) Representative: Kacsuk, Zsófia

(57) **Abstract**

The subject of the invention relates to a plant-based plant conditioner and protection product for cultivated plants, the essence of which is that the product, optionally with one or more additives and/or excipients, contains a mixture of the extracts of various plants produced using supercritical extraction, in which mixture the ratios of the extracts of the individual plants in the mixture are the following:
a) plants from the amaryllis family (Amaryllidaceae), 20 - 30 mass%
b) plants from the dead-nettle family (Lamiaceae), 20 - 30 mass%
c) plants from the nettle family (Cecropiaceae), 15 - 25 mass%
d) plants from the aralia family (Araliaceae), 20 - 25 mass%
e) plants from the nightshade family (Solanaceae), 10 - 15 mass%
f) plants from the myrtle family (Myrtaceae), 5 - 15 mass%.

The subject of the invention also relates to a method for the production of such a product, as well as to the use of the product according to the invention.

## Description

The present invention relates to a plant conditioner and plant protection product for cultivated plants.

The present invention also relates to a method for the production of such a product.

The present invention also relates to the use of such a product.

According to reports the population of the Earth doubled over the past seventy years, during which time the area of cultivated agricultural land has only increased by 10%. Therefore, there is an increasingly greater need to produce as much foodstuff as possible on the arable land available due to the continuous increase in the population.

Also, it is widely known that production yield is significantly reduced by bacterial, virus and various fungal infections and by pest insects. Starting from the 1950s synthetically produced pesticides started becoming widespread around the world for the purpose of protecting plants from infections and pests, which pesticides may now be found everywhere in our environment. Industrial agriculture has become completely dependent on these chemicals, as they are used to protect cultivated plants from pests and disease and also to ensure the appropriate level of production yield.

The first generation pesticides were chlorinated hydrocarbons, such as, for example DDT, DDE, carbon tetrachloride, and heptachloride. The use of these today is strictly controlled or even prohibited, as during investigations it turned out that they are not only extremely toxic for the pests but also for humans as well. Their long-term effects on the human body are being investigated even to this day. It is unfortunate that as chlorinated hydrocarbons are very stable compounds and decompose in nature only slowly, after being banned they will continue to pollute the soil and wildlife for a long time.

Early pesticides also include organic phosphoric acid esters (e.g. dichlorophosphate, fonofos, diazinon, coumaphos, malathion), which have an effect on the central nervous system. Carbamates (e.g. karbaril, pirimicarb, maneb) also exert their effect on the central nervous system and recent research has shown a connection between them and developmental abnormalities in small children. Synthetic pyrethroids (e.g. deltamethrin, cypermethrin, cyhalothrin) used as pesticides damage the endocrine system. A more recent generation of pesticides includes neonicotinoids (e.g. acetamipirid, imidacloprid), these, according to investigations, have a damaging effect on nervous system development, therefore the European Commission introduced restrictions in connection with their use. It turned out that chloroacetamides (e.g. alachlor, metolachlor) may cause developmental abnormalities, so now the EU does not permit their use. Many pesticides (such as Roundup) are presumed to have a carcinogenic effect.

Over the past decades it has become increasingly obvious that the pesticide residues in agricultural produce grown for consumption, as well as their degradation products have a serious health-damaging effect, this is why in the recent past the number of research projects investigating the effect of pesticides on the human body and wildlife has significantly increased. These investigations made it obvious that a clear statistical relationship can be shown to exist between exposure to pesticides and the development of nervous and immune system diseases, cancer diseases and developmental abnormalities. In spite of the restrictions and bans, unfortunately many synthetic pesticides are still commercially available that have health damaging effects that are not yet known.

The only sure solution for avoiding the health-damaging effects presented above is to reduce the use of toxic synthetic pesticides. At the same time, in order to maintain production yield, the cultivated plants must be appropriately protected against diseases and pests. Attempts have been made to solve this dual problem. In traditional, chemical-free agriculture it has been known for a long time that when certain plants are planted next to one another, they have a favourable effect on each other's growth. It is also known that certain plants are able to keep insect pests away, while extracts of other plants are effective against fungal infections.

It is widely known in agriculture that an infusion of the leaves of certain types of nettle is suitable for spraying cultivated plants. Patent document number HU 226041, for example, presents a pesticide solution made using equisetum, garlic, nettle and rainwater, which is used when growing paprika. Patent document number HU 225901 also presents a 15 mass% solution made from equisetum, garlic and nettle for spraying organic sea buckthorn.

The greatest disadvantage of the known pesticides containing natural active substances is that they are not sufficiently effective. The primary reasons for this include the selection of the plants used and the method used for extracting the plant active substances.

In the case of the presently known solutions so-called water or medicinal water extraction is used for extracting the active substances from plants (see, for example, patent specification number HU 217529). The greatest disadvantage of water extraction is that its efficiency is exceptionally low, in other words the extract obtained in this way contains a low concentration of the useful active substances. Another disadvantage of water extraction is that in addition to the active substance the toxic substances (e.g. artificial fertiliser, heavy metals, synthetic pesticide residues, etc.) to be found in the plants used also get into the extract, therefore, in the end these health-damaging materials get back into the soil.

It is an object of the invention to provide a plant-based plant conditioner and protection product, as well as a method for the production and use of such a product that is free of the disadvantages of the solutions according to the state of the art.

The basis of the invention is that extracts are produced from specific plants in a specific way, and by mixing the plant extracts in a specific ratio a natural product may be produced that may be used as both a plant conditioner and pesticide.

The invention is based on the recognition that the plant conditioning and protecting effect of the extracts of specific plants can be significantly increased when supplemented with the extracts of other, appropriately selected plants, in other words a better effect can be achieved through the joint use of the extracts than by using the individual extracts separately over time. The invention is also based on the recognition that if the production of extracts from the appropriately selected plants is performed using supercritical extraction, then, surprisingly the synergy occurring with the mixing of the obtained extracts appears more markedly than that experienced in the case of traditional water/water vapour extraction.

The invention is also based on the recognition that an extract obtained using supercritical extraction contains the active substances at an exceptionally high concentration in such a way that the extract remains free of the toxic materials (artificial fertiliser, heavy metals, synthetic pesticide residues, etc.) to be found in the plants used.

During our experiments it was found that a homogenised mixture of the extracts of plants from the amaryllis family (Amaryllidaceae), the dead-nettle family (Lamiaceae), the nettle family (Cecropiaceae), the aralia family (Araliaceae), the nightshade family (Solanaceae), and the myrtle family (Myrtaceae) produced using supercritical extraction, optionally mixed with one or more known additives and/or excipients, may be used outstandingly well as a plant conditioning and protection product for spraying crop plants (such as rape, potato, tomato, garlic, poppy, sour cherry, honeydew melon, and grapes). In the context of the present invention plant type means the botanical families used in the taxonomic categorisation of plants, as is obvious for a person skilled in the art.

The product according to the invention has a positive effect on the development of the foliage and roots of flowers, vegetables, fruits, saplings and arable crops, in other words it improves the condition of the plant and its natural protective ability. In addition, the product provides protection against bacterial, virus and fungal diseases of plants and against insect pests.

A great advantage of the product according to the invention is that as it has a completely natural base and does not contain toxic components, hence protective equipment and clothing is not required when it is used.

The product contains a mixture of extracts of plants made using supercritical extraction, and, optionally, one or more additives and/or excipients. During supercritical extraction the soluble components are extracted from plant materials using a solvent in a supercritical state. During the extraction the elution ability of the solvent may be regulated by changing the physical parameters (e.g. temperature, pressure, flow rate), therefore, in addition to an exceptionally good degree of selective elution, selective separation may also be realised. The eluted material is separated from the solvent at the end of the supercritical extraction operation, preferably by using pressure reduction. One of the most significant advantages of supercritical extraction as compared to traditional organic solvent techniques is that the solvent may be separated from the extract without leaving any residue, therefore the final product is free of organic solvents that are damaging to the health.

During our experiments it was found that the homogenised mixture of the extracts of various plants produced using supercritical extraction is the most effective as a plant conditioning and protecting agent, if the ratios of the extracts of the individual plants in the mixture are the following:
a) plants from the amaryllis family (Amaryllidaceae), 20 - 30 mass%
b) plants from the dead-nettle family (Lamiaceae), 20 - 30 mass%
c) plants from the nettle family (Cecropiaceae), 15 - 25 mass%
d) plants from the aralia family (Araliaceae), 20 - 25 mass%
e) plants from the nightshade family (Solanaceae), 10 - 15 mass%
f) plants from the myrtle family (Myrtaceae), 5 - 15 mass%.

It was surprising to find that the synergic effect of the various extracts strengthening each other is even more significant if the components a) and b) jointly make up at least 50 mass% of the extract mixture.

In the case of a preferable embodiment, in order to make the oily, lipophilic extracts soluble in water, an emulsifier is mixed with the product as an additive, preferably the soya-based emulsifying agent polysorbate 20. Naturally, optionally the use of other, preferably natural emulsifiers is also possible.

The homogenised mixture of the extracts produced using supercritical extraction contains the plant conditioning and protecting active substances at a very high concentration, therefore in the case of a preferable embodiment, water as an auxiliary material is added to the product according to the invention in the interest of easier use. In the case of an especially preferable embodiment, the ratio of the emulsifier in the product is 0.0000025 mass%, the ratio of water is 99.9999925 mass% and the ratio of the extract mixture is 0.000005 mass%. Optionally, an embodiment may also be conceived in the case of which the product contains other additives in addition to the emulsifier, such as rosmarinic acid.

The subject of the invention also relates to a method for the production of the product. According to the method:
Plants belonging to the
   a) amaryllis family (Amaryllidaceae),
   b) dead-nettle family (Lamiaceae),
   c) nettle family (Cecropiaceae),
   d) aralia family (Araliaceae),
   e) nightshade family (Solanaceae), and
   f) myrtle family (Myrtaceae)
are extracted with supercritical extraction, the plant extracts are combined and homogenised, then, optionally, one or more additives and/or excipients are mixed with the obtained mixture. For example, the aforementioned emulsifier polysorbate 20 may be used as an additive, which makes the extracts soluble in water. If water is used as an excipient it is preferable if rosmarinic acid is also added to the product, which stabilises the product and extends its shelf life.

According to experiments performed the moisture content of the plants has a great effect on the efficiency of extraction, therefore, in the case of an especially preferable embodiment, before performing the extraction process, the plants are gently dried preferably at a temperature between 35 - 38 °C. Gentle drying means the extraction of water using a known technology (e.g. sun drying, air drying) that maintains the original aroma and active substance content of the plant. Optionally, an embodiment may be conceived in the case of which the drying is performed at a low temperature. An example of this may be freeze-drying in a vacuum (lyophilisation), as is known to a person skilled in the art.

It is known that before supercritical extraction is performed, the plants to be processed are prepared, most frequently chopped. During our experiments it was found that the efficiency of extraction is significantly influenced by the fraction size, in other words by the particle size to which the plant to be subjected to extraction is chopped. In the case of an especially preferable embodiment, during the process the plants to be subjected to extraction are ground to a fraction size of between 1 - 2 mm, which - according to our investigations - represents the most optimal particle size.

In the case of an especially preferable embodiment, carbon dioxide is used as the solvent for the supercritical extraction, which has numerous preferable characteristics. Carbon dioxide is not corrosive, not flammable, not toxic, and as a result of its relatively high density, it is able to dissolve a large amount of active substance. Another very important advantage is that its critical temperature is relatively low (31.06 °C), therefore the heat-sensitive plant active substances can be extracted almost without any heat damage and in the form complying with their natural occurrence. As carbon dioxide is an apolar compound, it mainly dissolves apolar active substances. In this way, the toxic compounds, which are generally polar compounds, are not extracted into the extract. Naturally, an embodiment may also be conceived in the case of which a polar solvent (e.g. ethanol) is used instead of (or in addition to) carbon dioxide, with which the polar active substances also become soluble.

The amount and composition of the soluble substances in the plants in families a) - f) differ considerably, therefore during the method according to the invention the supercritical extraction is performed using various physical parameters in the case of the various plants. Physical parameters mean the extraction pressure and temperature, the solvent flow rate and the duration of the extraction process, as is obvious for a person skilled in the art.

In the case of a preferable embodiment the supercritical extraction of plants in the amaryllis family present as component a) preferably takes place for 50 - 70 minutes, using a carbon dioxide flow rate of 150 - 170 litres/hour, at a pressure of 170 - 210 bar, and at a temperature of 40 - 50 °C.

The supercritical extraction of plants in the dead-nettle family present as component b) preferably takes place for 70 - 90 minutes, using a carbon dioxide flow rate of 130 - 150 litres/hour, at a pressure of 225 - 275 bar, and at a temperature of 50 - 60 °C.

The supercritical extraction of plants in the nettle family present as component c) preferably takes place for 70 - 90 minutes, using a carbon dioxide flow rate of 120 - 140 litres/hour, at a pressure of 170 - 210 bar, and at a temperature of 50 - 60 °C.

The supercritical extraction of plants in the aralia family present as component d) preferably takes place for 40 - 60 minutes, using a carbon dioxide flow rate of 190 - 210 litres/hour, at a pressure of 270 - 330 bar, and at a temperature of 45 - 55 °C.

The supercritical extraction of plants in the nightshade family present as component e) preferably takes place for 120 - 140 minutes, using a carbon dioxide flow rate of 150 - 170 litres/hour, at a pressure of 250 - 310 bar, and at a temperature of 50 - 60 °C.

The supercritical extraction of plants in the myrtle family present as component f) preferably takes place for 80 - 100 minutes, using a carbon dioxide flow rate of 215 - 245 litres/hour, at a pressure of 270 - 330 bar, and at a temperature of 50 - 60 °C.

The subject of the invention also relates to the use of the product for the conditioning and protection of crop plants, during which the crop plant is treated with the product according to the invention presented above. In the context of the present invention treating means that the product according to the invention is imparted onto the plants to be treated, such as by spraying at specified intervals. The treated crop plants are preferably rape, potato, tomato, garlic, poppy, sour cherry, honeydew melon and grapes, but, naturally, the use of the product according to the invention on other crop plants is also conceivable. In the case of a preferable embodiment one hectare of the crop plants is treated with a product containing 10 - 30 grams of the extract mixture.

In the following the product according to the invention is presented via effect examples. Comparative investigations were performed among plants treated with the product according to the invention and untreated (control) plants. During the tests the production yield, the yield quality, the storage stability, the foliage mass, the root system of the treated plants and the appearance of pests were monitored as compared to the control.

### Example 1

Strawberry: exceptionally good experimental results were obtained in connection with this culture. During the investigation the product according to the invention was sprayed onto the plants at two-week intervals starting from the main flowering period until the end of the growing season. During the spraying period a total of 20 g of extract was used per hectare. A very significant, 15% average increase in harvest results (ripening speed, berry size balance) was measured. The produce had a significantly higher sugar content (26% sugar content increase) and longer storage stability as compared to the control. During the growing season only weak instances of grey mould were observed. In this respect the plants treated with the product according to the invention had greater protection against Botrytis cinerea as compared to the control group plants.

### Example 2

Poppy: the use of the product according to the invention involving a total amount of 20 g/ha of the extract mixture during the growing season significantly increased the amount of yield, and there was a clear increase seen in the number of seed heads.

### Example 3

Rape: the plants were sprayed with the product according to the invention at two-week intervals starting from when the plants reached a stem height of 20 - 30 cm up until the end of the growing season. In this case also a total of 20 g of extract was used per hectare during the spraying period. After harvesting the phenology tests gave positive results with respect to rape pollination, the number of seedpods and the number of seeds per pod as compared to the untreated control group.

### Example 4

Honeydew melon: the plants were sprayed with the product according to the invention at two-week intervals starting from when the plants reached a stem height of 20 - 30 cm up until the end of the growing season. In this case, also a total of 20 g of extract was used per hectare during the spraying period. There were no visible or assessable differences observable with respect to shoot length and flowering as compared to the control group, however, the size of the produce, the individual weights of the melons and the total weight of produce from the growing area were 10-15% higher as compared to the control group.

### Example 5

Garlic: the plants were sprayed with the product according to the invention at two-week intervals starting from the beginning of the growing phase all the way until the end of the growing season. In this case a total of 30 g of extract was used per hectare during the spraying period. There was a visible difference during the harvesting period in terms of the phenology stages as compared to the control group. The above-surface parts of the plants on the plots treated with the product according to the invention dried 4-7 days sooner. In spite of the faster ripening, the size and weight of the subsurface produce, and the total amount produced was 10-15% higher as compared to the untreated control group.

### Example 6

Sour cherry: after flowering the plants were sprayed with the product according to the invention on three occasions up until the end of the growing season and in the phenology stage. In this case a total of 30 g of extract was used per hectare during the spraying period. As a result of the treatment a low degree of pathogen infection was seen (Monilinia spp., Stigmina carpophylla), there were no visible signs of disease on the shoots or the produce. When the fruit was ripe, the produce from the plots treated with the product according to the invention had a darker red colour as compared to the untreated control group, and ripening started a few days earlier.

Clearly various modifications of the above described embodiments will be apparent to a person skilled in the art without departing from the scope of protection determined by the attached claims.

## Claims

1. Plant-based plant conditioner and protection product for cultivated plants, **characterised by** that the product, optionally with one or more additives and/or excipients, contains a mixture of the extracts of various plants produced using supercritical extraction, in which mixture the ratios of the extracts of the individual plants in the mixture are the following:
a) plants from the amaryllis family (Amaryllidaceae), 20 - 30 mass%
b) plants from the dead-nettle family (Lamiaceae), 20 - 30 mass%
c) plants from the nettle family (Cecropiaceae), 15 - 25 mass%
d) plants from the aralia family (Araliaceae), 20 - 25 mass%
e) plants from the nightshade family (Solanaceae), 10 - 15 mass%
f) plants from the myrtle family (Myrtaceae), 5 - 15 mass%.

2. The product according to claim 1, **characterised by** that the components a) and b) jointly make up at least 50 mass% of the extract mixture.

3. The product according to claim 1 or 2, **characterised by** that it contains an emulsifier as additive, water as an excipient, and preferably the ratio of the emulsifier is 0.0000025 mass%, the ratio of water is 99.9999925 mass% and the ratio of the extract mixture is 0.000005 mass%, and preferably the emulsifier is a soya-based polysorbate 20 emulsifier.

4. Method for the production of a product according to any of claims 1 to 3, **characterised by** extracting plants belonging to the
a) amaryllis family (Amaryllidaceae),
b) dead-nettle family (Lamiaceae),
c) nettle family (Cecropiaceae),
d) aralia family (Araliaceae),
e) nightshade family (Solanaceae), and
f) myrtle family (Myrtaceae)
with supercritical extraction, combining and homogenising the plant extracts, then, optionally, mixing one or more additives and/or excipients with the obtained mixture.

5. Method according to claim 4, **characterised by** that before the supercritical extraction the plants belonging to the families a) - f):
- are dried at a temperature preferably between 35 - 38 °C then
- are ground to a particle size of between 1 - 2 mm.

6. Method according to claim 4 or 5, **characterised by** using carbon dioxide as a solvent during the supercritical extraction.

7. Method according to claim 6, **characterised by** performing the supercritical extraction of the plants in the amaryllis family present as component a) preferably for 50 - 70 minutes, using a carbon dioxide flow rate of 150 - 170 litres/hour, at a pressure of 170 - 210 bar, and at a temperature of 40 - 50 °C.

8. Method according to claim 6 or 7, **characterised by** performing the supercritical extraction of the plants in the dead-nettle family present as component b) preferably for 70 - 90 minutes, using a carbon dioxide flow rate of 130 - 150 litres/hour, at a pressure of 225 - 275 bar, and at a temperature of 50 - 60 °C.

9. Method according to any of claims 6 to 8, **characterised by** performing the supercritical extraction of the plants in the nettle family present as component c) preferably for 70 - 90 minutes, using a carbon dioxide flow rate of 120 - 140 litres/hour, at a pressure of 170 - 210 bar, and at a temperature of 50 - 60 °C.

10. Method according to any of claims 6 to 9, **characterised by** performing the supercritical extraction of the plants in the aralia family present as component d) preferably for 40 - 60 minutes, using a carbon dioxide flow rate of 190 - 210 litres/hour, at a pressure of 270 - 330 bar, and at a temperature of 45 - 55 °C.

11. Method according to any of claims 6 to 10, **characterised by** performing the supercritical extraction of the plants in the nightshade family present as component e) preferably for 120 - 140 minutes, using a carbon dioxide flow rate of 150 - 170 litres/hour, at a pressure of 250 - 310 bar, and at a temperature of 50 - 60 °C.

12. Method according to any of claims 6 to 11, **characterised by** performing the supercritical extraction of the plants in the myrtle family present as component f) preferably for 80 - 100 minutes, using a carbon dioxide flow rate of 215 - 245 litres/hour, at a pressure of 270 - 330 bar, and at a temperature of 50 - 60 °C.

13. Method according to any of claims 4 to 12, **characterised by** using rosmarinic acid, and/or water and/or polysorbate 20 emulsifier as additives and/or excipients.

14. The use of the product according to any of claims 1 to 3, **characterised by** that the crop plant is treated during the growing season with the product according to claims 1 to 3, which crop plants are preferably rape, potato, tomato, garlic, poppy, sour cherry, honeydew melon, or grapes.

15. The use according to claim 14, **characterised by** that during the growing season one hectare of the crop plants is treated with a product containing 10 - 30 g of extract mixture.
